# EUROPEAN PATENT SPECIFICATION

(11) **EP 1 514 785 B1**
(45) Date of publication and mention of the grant of the patent: **15.11.2006**
(21) Application number: 04021708.5
(22) Date of filing: 13.09.2004
(51) Int. Cl.: B62K 11/10

(54) **Scooter type motorcycle**
Rollerartiges Motorrad
Motocyclette du type scooter

(30) Priority: 12.09.2003 JP 2003322330
(43) Date of publication of application: 16.03.2005
(73) Proprietor: YAMAHA HATSUDOKI KABUSHIKI KAISHA, Iwata-shi, Shizuoka-ken (JP)
(72) Inventor: Takashi, Taniguchi, c/o Yamaha Hatsudoki K. K., Iwata-shi, Shizuoka-ken (JP); Takeo, Hakamata, c/o Yamaha Hatsudoki K. K., Iwata-shi, Shizuoka-ken (JP); Yoshiaki, Yamamoto, c/o Yamaha Hatsudoki K. K., Iwata-shi, Shizuoka-ken (JP)
(74) Representative: Grünecker, Kinkeldey, Stockmair & Schwanhäusser Anwaltssozietät

(56) References cited:
- EP-A- 0 953 501
- PATENT ABSTRACTS OF JAPAN vol. 0173, no. 77 (M-1446), 15 July 1993 (1993-07-15) & JP 5 065086 A (SUZUKI MOTOR CORP), 19 March 1993 (1993-03-19)

## Description

This invention relates to a vehicle, in particular a scooter type motorcycle, having a unit swing type power unit supported for swinging on a vehicle body frame, wherein an introduction opening for drawing in cooling air is formed at a transmission chamber of the unit swing type power unit, and wherein an air suction duct for introducing the cooling air to the introduction opening is fixedly supported on the vehicle body frame.

Commonly, a scooter type of motorcycle comprises a vehicle body frame which supports a unit swing type power unit for free swinging. The unit swing type power unit is made by combining together an engine and a transmission unit into a single unit to drive a rear wheel supported with a shaft of the power unit and to propel the vehicle. As the transmission, preferably a V-belt type automatic transmission is used. The V-belt type automatic transmission is housed in a transmission chamber so that less noise leaks outside.

Heat transmitted from the engine or generated by transmitting operation builds up in the transmission chamber and has adverse effects for example on the V-belt of the automatic transmission. Therefore, it is necessary to draw fresh air for cooling to the transmission chamber, as is known, e.g. from JP-A-2003-182674. Therein, for introducing fresh air drawn through an air suction duct into the transmission chamber of the unit swing type power unit, a connecting part of the air suction duct is made of a bellows. The connecting part of the bellows of the air suction duct has a relatively small opening area of the inside passage for the suctioned air relative to its external shape, which leads to problems such as lowering in cooling efficiency.

It is, therefore, an object of the invention to provide an improved vehicle, in particular a scooter type motorcycle having an increased cooling efficiency.

For a vehicle of the above kind, this object is solved in an inventive manner in that the air suction duct comprises a connection opening which covers the introduction opening for a freely swinging movement therebetween.

According to a preferred embodiment, the connection opening surrounds the introduction opening with a clearance being provided therebetween.

According to another embodiment, the introduction opening is provided at a front side of the transmission chamber and/or in that the connection opening is provided at a rear end of a main body of the air suction duct.

According to still another embodiment, a fresh air suction opening is provided at a front end portion of a main body of the air suction duct.

Preferably, a fresh air suction opening is open to an interior of the vehicle body, in particular to center tunnel provided laterally between footrest regions of the vehicle.

Further preferably, the fresh air suction opening of the air suction duct is located above a fuel tank.

Still further preferably, the vehicle body frame comprises an upper frame extending from a head pipe through a footrest region and below a seat to the rear end of the vehicle body, and a lower frame extending from a middle portion of the upper frame downwardly, and wherein the air suction duct is located between and attached to the upper and/or lower frames.

More preferably, a cooling fan is provided in the transmission chamber, in particular on an outer side of a drive pulley of a continuously variable transmission, for drawing in the cooling air into the transmission chamber.

Furthermore, preferably a discharge opening is formed on a rear side of the transmission chamber, the discharge opening preferably being directed toward a rear wheel of the vehicle.

Still further preferably, a main body of the air suction duct comprises an attachment hole for attachment of the air suction duct to a lower frame of the vehicle body frame and/or in that a connection opening is provided at a rear upper part of the main body of the air suction duct for attachment thereof to an upper frame of the vehicle body frame, in particular to a step part of a footrest thereof.

Further preferred embodiments are subject of the subclaims.

In the following, an embodiment of a scooter type motorcycle as a preferred embodiment of a vehicle according to the invention is described with reference to the attached drawings. Therein:
- FIG. 1: is a side view of a scooter type motorcycle;

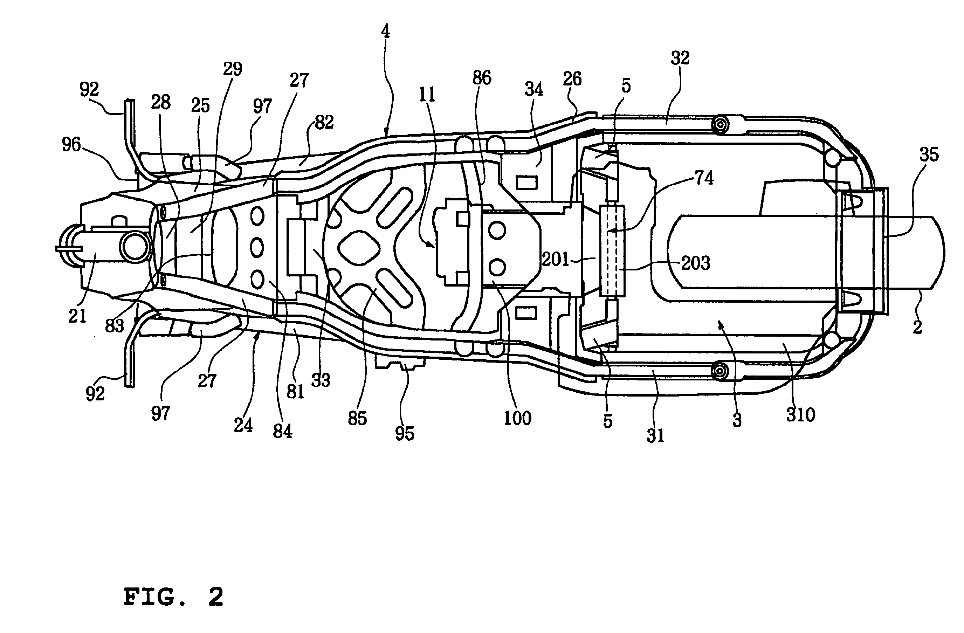

- FIG. 2: is a plan view of the vehicle body frame;
- FIG. 3: is a side view of the seat and its vicinity;
- FIG. 4: is a plan view of the seat and its vicinity;
- FIG. 5: is a side view of the area where the air suction duct is attached;
- FIG. 6: is a plan view of the area where the air suction duct is attached;
- FIG. 7: is a sectional view as seen along the line VII-VII in FIG. 5;
- FIG. 8: is a rear view of the area supporting the unit swing type of power unit;
- FIG. 9: is a partial, sectional view of the area where the air suction duct is connected to the unit swing type of power unit;
- FIG. 10: is a side view of the air suction duct;
- FIG. 11: is a plan view of the air suction duct; and
- FIG. 12a and b: are sectional views as seen along the line XII-XII in FIG. 1.

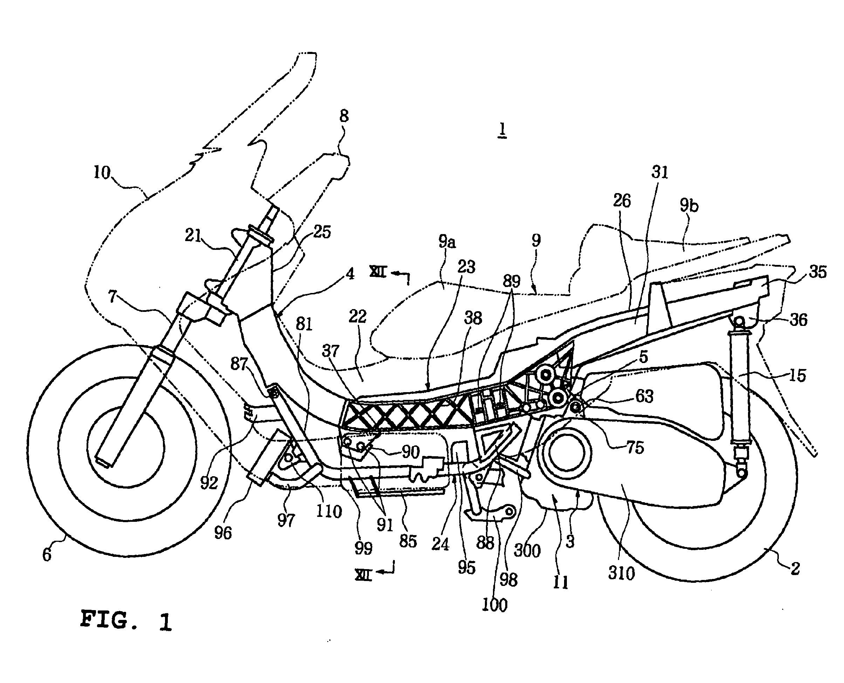

FIG. 1 is a side view of a scooter type motorcycle as a preferred example of a vehicle according to the invention.

In the figures, reference numeral 1 denotes a scooter type motorcycle of this embodiment. The scooter type motorcycle 1 comprises a vehicle body frame 4 with its head pipe 21 having a front fork 7 that can be turned. A front wheel 6 is supported at the lower part of the front fork 7. Steering handlebars 8 are attached to the upper part of the front fork 7.

The vehicle body frame 4 is made up of: an upper frame 23 extending from the head pipe 21 through a footrest region 22 and below a seat 9 to the rear end of the vehicle body, and a lower frame 24 extending from the middle of the upper frame 23 downward. The upper frame 23 is made of aluminum alloy while the lower frame 24 is made of iron-based alloy. In other words, the vehicle body frame 4 is made to be light-weight by making part of it using aluminum alloy that is relatively light.

The upper frame 23 is made up of separate parts: a front half 25 extending from the head pipe 21 to the footrest region 22, and a rear half 26 welded to the rear end of the front half 25 and extending to the rear end of the vehicle body. The front half 25 is made up of: the head pipe 21, paired right and left down frames 27 extending from the head pipe 21 rear downward, and two cross members 28, 29 interposed between those down frames 27, with these parts formed into an integral body by the so-called gravity casting process.

The rear half 26 of the upper frame 23 is made up of: a left hand longitudinal extension part 31 and a right hand longitudinal extension part 32 both extending longitudinally at the left and right hand lateral ends of the vehicle width, and first to three cross members 33 to 35 interconnecting the front end, middle, and rear end portions of the longitudinal extension parts 31 and 32, with these parts formed into an integral body by the vacuum die casting process.

The front part of the unit swing type power unit 3 is connected for free up and down swinging through supporting links 5 (to be described later) at longitudinally central portions of the left and right hand longitudinal extension parts 31, 32. A damper unit bracket 36 for connection to the upper end of a damper unit 15 is provided at the rear end of the longitudinal extension part 31 on the left hand side of the vehicle body. The front end of each of the left and right hand longitudinal extension parts 31 and 32 is provided with a bracket 37 projecting downward for connecting to the middle part of the lower frame 24 (to be described later).

Of the first to third cross members 33 to 35 for interconnecting the left and right hand longitudinal extension parts 31 and 32 of the rear half 26, the first cross member 33 for interconnecting the front end portions and the second cross member 34 for interconnecting the middle portions of the left and right hand longitudinal extension parts 31 and 32 are formed so that a large-sized holding box 85 capable of storing a crash helmet can be provided between those cross members. The holding box 85 is of a similar constitution to that employed in the conventional scooter type of motorcycle, with its top opening covered and uncovered with the seat 9.

The seat 9 is made up of a rider's seat portion 9a and a co-rider's seat portion 9b. The holding box 85 is made up of a front helmet holding portion 85a and a rear helmet holding portion 85b, with the former located below the rider's seat portion 9a while the latter below the co-rider's seat portion 9b. The front helmet holding portion 85a is open while the rear helmet holding portion 85b is covered with a box cover 85c. The rider's seat portion 9a serves as a lid on the front helmet holding portion 85a, and can be swung up and down about a pivot point on its front end to cover and uncover. The co-rider's seat portion 9b is placed on the box cover 85c of the rear helmet holding portion 85b.

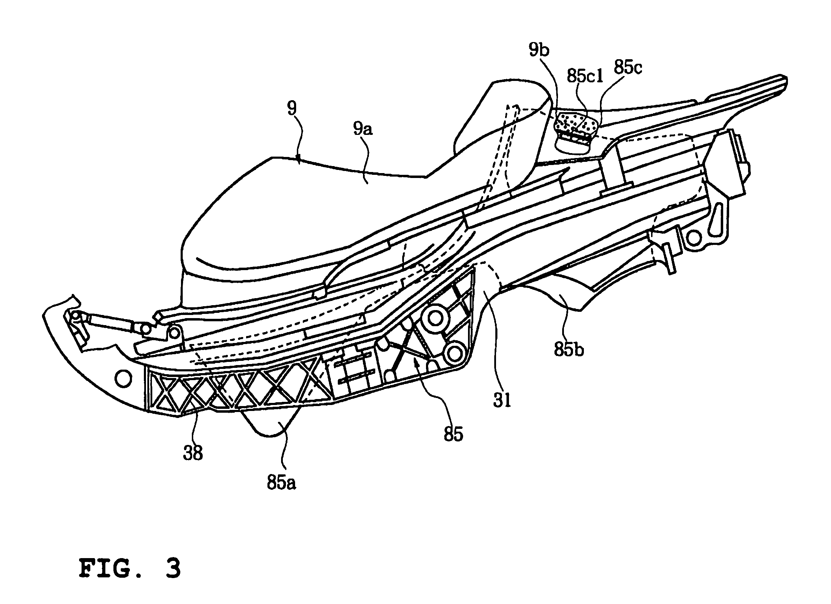

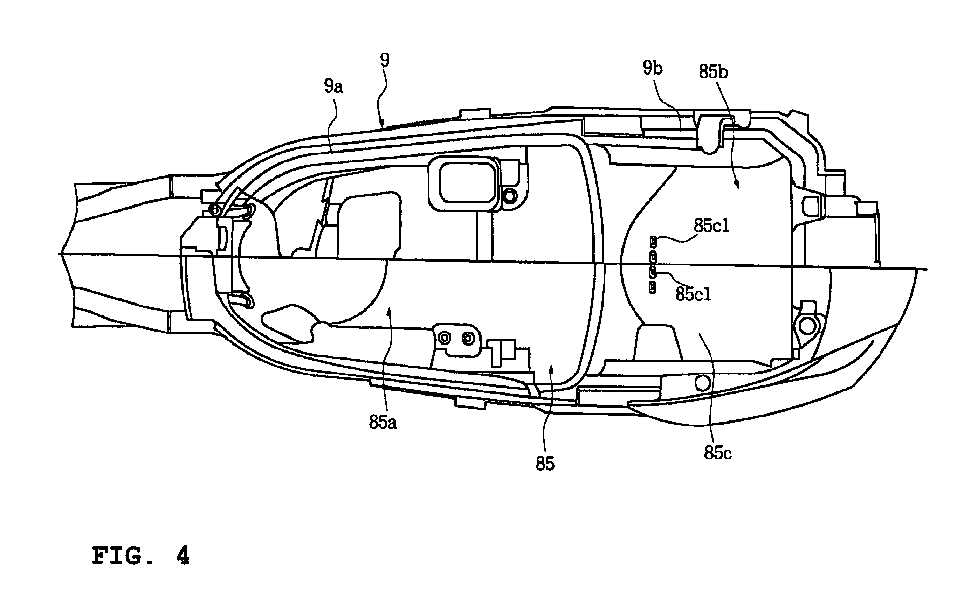

The rider's seat portion 9a is swung up forward about its front end pivot to store a crash helmet in the front helmet holding portion 85a and the rear helmet holding portion 85b. The box cover 85c is provided with plural holes 85c1 in the lateral center as shown in FIGs 3 and 4.

The holding box 85 is placed above and relatively close to the unit swing type of power unit 3 and affected by heat which accumulates in the holding box 85. The accumulated heat can be let out through the holes 85c1. When the driver's seat portion 9a is to be closed down, it would be less easy to do so if no passage were present for letting out air in the holding box 85. However, since air is let out through the holes 85c1, the driver's seat portion 9a can be closed down smoothly. Moreover, since the plural holes 85c1 provided in the box cover 85c as shown in FIGs. 3 and 4 are located in the lateral center of the box cover 85c and that they are covered with the co-rider's seat portion 9b, water is prevented from finding its way through the holes 85c1 into the holding box 85.

The down frames 27 of the front half 25 connected to the front ends of the longitudinal extension parts 31 and 32 extend rear downward. Since the front ends of the longitudinal extension parts 31 and 32 are supported firmly with the down frames 27 in the vertical direction, it is possible to constitute the upper frame 23 of a high torsional rigidity by combining the front half 25 with the rear half 26. In this embodiment, the longitudinal extension parts 31 and 32 are made to have a high rigidity even by themselves by integrally forming X-shaped reinforcing ribs as seen in side view on the inner sides of the front portions of the longitudinal extension parts 31 and 32 each having a cross section of a squared U-shape lying on its one side. The lower frame 24 of the vehicle body frame 4 is made up of: paired left and right hand pipes 81, 82 extending longitudinally below the upper frame 23, and first to fourth cross members 83 to 86 laterally interconnecting these pipes 81, 82.

Both of the pipes 81, 82 are formed as shown in FIG. 1 in the shape of a horizontal bar with its both end portions bent up to form obtuse angles, with their front ends each secured with a fitting bolt 87 to the front half 25 of the upper frame 23 while their rear ends each secured to the rear half 26 of the upper frame 23 through a connecting bracket 88. Each connecting bracket 88 is made of iron-based alloy like the pipes 81, 82 in a box shape with its lower end welded to the pipe 81 or 82 while its upper end secured with fitting bolts 89 to the rear half 26.

As shown in FIG. 1, both pipes 81, 82 are each provided with a connecting plate 90 to rise up at the front end of its lower, longitudinally extending portion. The front end portion of the rear half 26 is provided with brackets 37 to extend downward. The brackets 90 and the brackets 37 are tightened together with fitting bolts 91 as shown in FIG. 1, so that the lower frame 24 is supported with the upper frame 23. These left and right hand pipes 81, 82 are each provided, by welding, with a stay 92 for supporting the lower portion of a vehicle body cover 10 and with a stay 95 for supporting a side stand. These pipes 81, 82 support a radiator 96 through a bracket 110.

The radiator 96 is of a conventionally well-known, lateral water flow type placed as shown in FIG. 1 to rise up forward to be located below the front end portions of the pipes 81, 82 extending rear downward. Part of cooling water passages between the radiator 96 and an engine 11 is formed with the pipes 81, 82. The radiator 96 and the pipes 81, 82 are interconnected through cooling water hoses 97 while the pipes 81, 82 and the engine 11 are interconnected through cooling water hoses 98. Accordingly, at least a portion of a cooling water system of the vehicle is formed by at least a portion of the body frame of the vehicle.

Expressed in other words, the cooling water system of a vehicle, the vehicle being in particular a straddle-type vehicle, preferably a motorcycle such as a scooter-type motorcycle, comprises a frame element of the body frame of the vehicle, preferably the frame element extends in a longitudinal direction of the vehicle, more preferably the frame element is a tube-like element. An internal cross-section of the frame element may be of any suitable shape, in particular round or rectangular. The frame element which, in particular, extends in parallel to another frame element such as a main frame element of the vehicle frame. The frame element which is part of the cooling water system for an engine of the vehicle is preferably arranged between the engine and a cooling device such as a radiator and is configured to transport a cooling liquid from the engine towards the radiator and/or vice versa. It is also possible that a plurality of such frame elements are provided. The frame elements may be interconnected to one another and/or to the radiator and/or to the engine via further solid tubes or flexible hoses which are not part of the body frame of the vehicle. The frame element, in the present embodiment, being a pipe 81 or a pipe 82 structurally increases the stability of the body frame of the vehicle and is preferably connected to another part of the body frame via connecting elements such as bolts or a welding portion. The frame element may be connected to another part of the body frame at a front end only and/or at a rear end only and/or at multiple positions along its longitudinal direction including a front end or a rear end.

As shown in FIG. 1, the cross member 85 interconnecting both pipes 81, 82 is made to support a fuel tank 99. The fuel tank 99 is placed in a space formed above the cross member 85, between the cross member 85 and the holding box 85. The cross member 86 is formed to be convex downward as seen from behind and its lateral center is provided with a bracket 100 for the main stand.

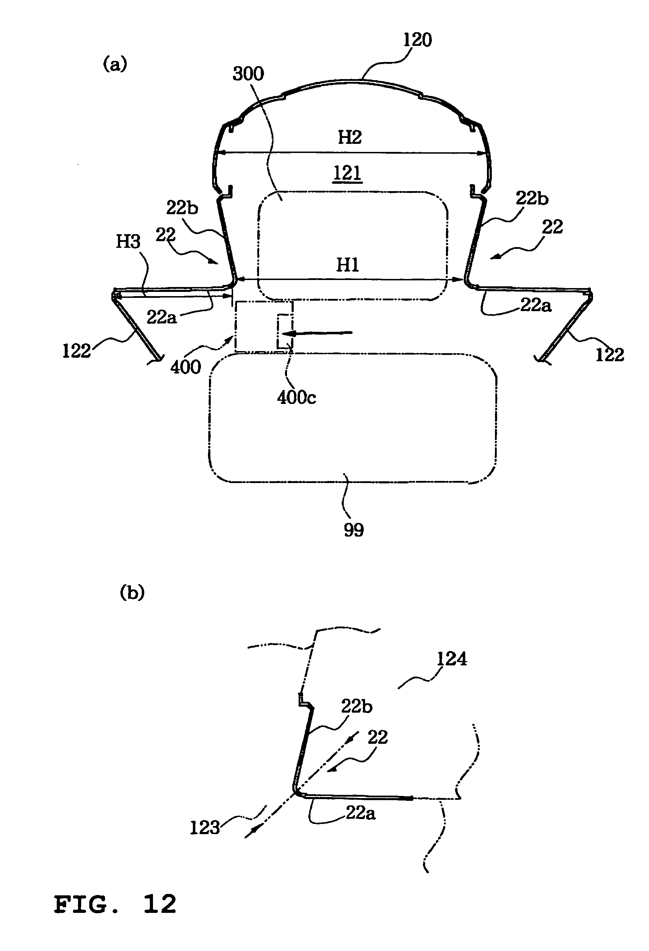

As shown in FIG. 12 (a), the footrest regions 22 are each made up of a step portion 22a extending generally horizontally and a (vertical) wall portion 22b rising from the inside end of the step portion 22a. The paired left and right vertical wall portions 22b are tilted so that they are slightly more distant from each other as they extend upward. An upper cover 120 is placed over the (vertical) wall portions 22b to form a center tunnel 121. The center tunnel 121 is formed with an upper width H2 wider than a lower width H 1.

A side cover 122 is connected to the lower part of each step portion 22a. The front portion of the holding box 85 is placed in the center tunnel 121. The fuel tank 99 is placed below the center tunnel 121.

Forming the center tunnel 121 with the wider upper width H2 and the narrower lower width H1 as described above makes it possible to place effectively in the center tunnel 121 the holding box 85 even if its front upper portion has a large volume. It is also possible to improve foot landing comfort and esthetic appearance by keeping a narrow vehicle width while securing a foot placement space H3. It is further possible to improve gripping main body when the wide width portion of the upper portion of the center tunnel 121 is squeezed by legs. As shown in FIG. 12(b), the footrest region 22 is divided into the left and right portions and each has the (vertical) wall portion 22b rising up from the inside end of the step portion 22a. The shape in which the (vertical) wall portion 22b slightly tilted to widen up outward can be formed easily by drawing paired press dies 123, 124 in the direction of the bisector of the angle between the step portion 22a and the vertical wall portion 22b.

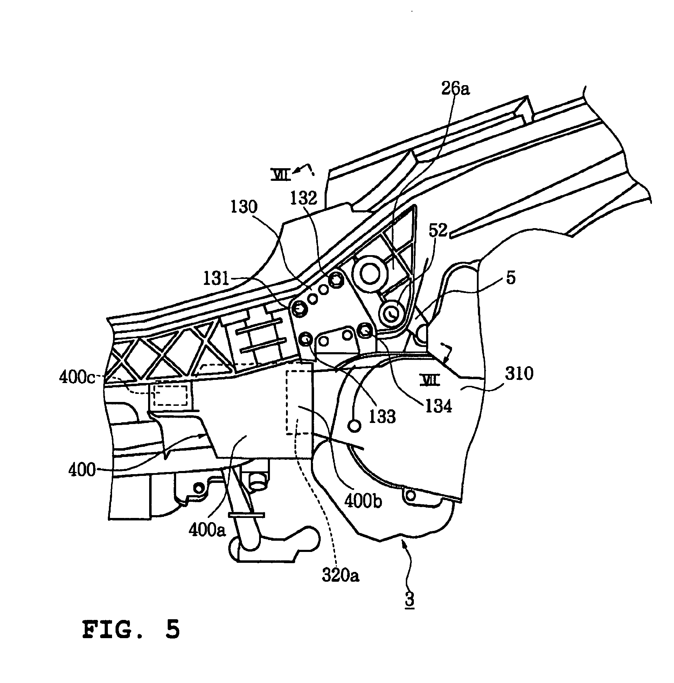

As shown in FIGs. 1 and 5, a footrest 130 is tightly attached to the upper frame 23 of the vehicle body frame 4 using fitting bolts 131 to 134 in four positions. The footrest 130 is tightly attached to a front side of the part where the unit swing type power unit 3 is to be mounted. The tight attachment of the footrest 130 increases rigidity of the area around part of the upper frame 23 where the unit swing type power unit 3 is mounted.

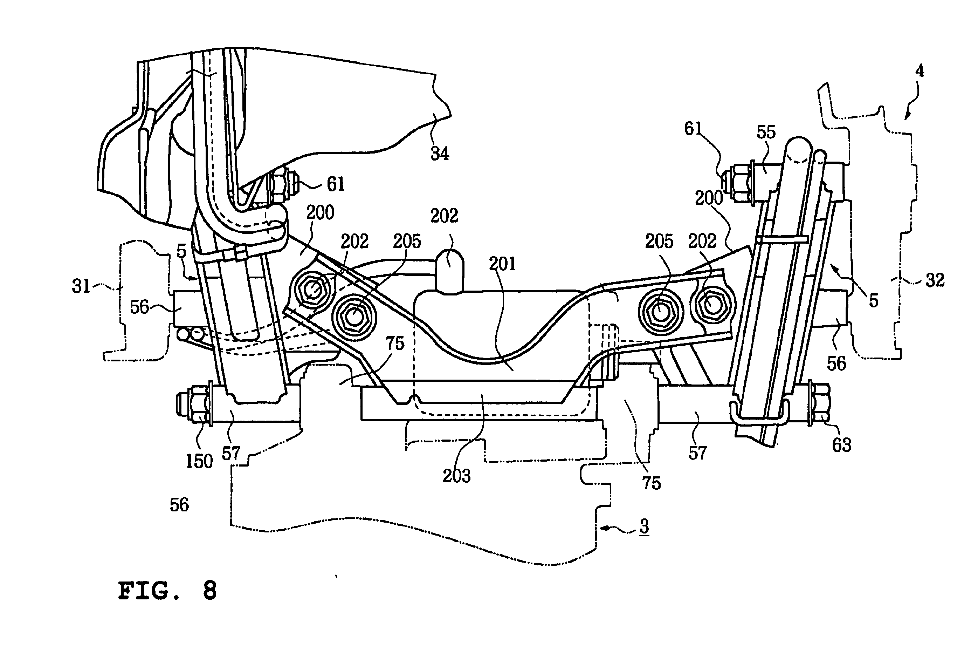

The unit swing type power unit 3 having a rear wheel 2 is supported on the rear part of the vehicle body frame 4 through links 5 so as to swing up and down freely. As shown in FIGs. 5, 7, and 8, the unit swing type of power unit 3 is elastically supported through rubber dampers 53, 54 with cylindrical bosses 51, 52 provided two for each in positions near the inner sides of the left and right hand longitudinal extension parts 31, 32.

Each link 5 is made up of side plates 58, 59 formed in a plate shape by a punching process and bosses 55 to 57 made of drawn material and welded to three positions on the side plates 58, 59, two at their longitudinal ends and one in the center. Of the three bosses 55 to 57, the topmost-located boss 55 serves as a swing base S1 of the link 5, the lower end boss 57 serves as a swinging part S2, and the boss 56 in the middle serves as a middle supporting part S3.

An attachment plate 200 projecting toward the inside of the vehicle body is welded to the side plate 58 of each of the left and right links 5. An engine bracket 201 is secured between the left and right attachment plates 200 using fitting bolts 202, 205. A boss 203 welded to the engine bracket 201 serves as a swinging end. The attachment plate 200 is welded to the lower end boss 57 welded to the right hand link 5, thereby increasing the supporting strength of the boss 57.

The cylindrical bosses 51, 52 are each formed on the rear half 26 of the vehicle body frame 4 in upper and lower positions on an extension 26a extending vertically by the side of the link 5 with the upper boss 51 located more forward than the lower boss 52. As a result, the link 5 is tilted to extend down rearward.

Of the three bosses 55 to 57 in three positions on the link 5, the topmost boss 55 serving as a swinging base and the middle boss 56 are respectively provided with frame connection support shafts 61, 62 projecting toward the outer side of the vehicle body. A support shaft 63 for power unit connection is passed through the lowermost boss 57 serving as the swinging end and through the boss 203 of the engine bracket 201. The frame connection support shafts 61, 62 are bolts passing through the bosses 55, 56 of the link 5 and through the cylindrical bosses 51, 52 of the vehicle body frame 4, with their heads projecting in the side directions. The central portions of the rubber damper assemblies 64, 65 provided inside the cylindrical bosses 51, 52 are tightened to the link 5. The rubber damper assemblies 64, 65 are made up of: inner cylinders 66, 67 tightened to the link 5 using support shafts 61, 62 inserted therein, outer cylinders 68, 69 press fit to the inside round surfaces of the cylindrical bosses 51, 52, and rubber dampers 53, 54 interposed between the inner cylinders 66, 67 and the outer cylinders 68, 69.

Rubber dampers 53, 54 are glued to the outside round surfaces of the inner cylinders 66, 67 and inside round surfaces of the outer cylinders 68, 69 in the state of being solidified and filling the spaces between the inner cylinders 66, 67 and outer cylinders 68, 69. In other words, the links 5 are elastically supported on the vehicle body frame 4 through the rubber dampers 53, 54 located laterally outer than the links 5, as the rubber damper assemblies 64, 65 are press fit into the cylindrical bosses 51, 52 and tightened to the links 5 using the support shafts 61, 62.

The support shaft 63 for power unit connection provided at the swinging end of the links 5 is a bolt. The boss 203 is located between the bosses 57. The support shaft 63 extends from the right hand link 5 to the left hand link 5, passes through the bosses 57 and the boss 203. As a result, the right hand link 5 and the left hand link 5 are interconnected through the engine bracket 201 and through the power unit connecting support shaft 63 to form a link assembly 74.

Attachment of the engine bracket 201 is made as follows: First the engine bracket 201 is temporarily stopped between the attachment plates 200 of the right and left hand links 5 using fitting bolts 202, 205. In the state of the engine bracket 201 being stopped temporarily, brackets 75 for connecting the unit swing type of power unit 3 are placed between the bosses 57 of the right and left links 5 and the boss 203 of the engine bracket 201, the support shaft 63 for connecting the power unit is passed from right through the boss 57, the connection bracket 75, the boss 203, the boss 57, a nut 150 is screwed to the projecting end of the support shaft 63 from the left boss 57, and the fitting bolts 202, 205 that were temporarily stopped are tightened. Thus, the unit swing type of power unit 3 is assembled and supported with good accuracy using the support shaft 63 for connecting the power unit without being affected by tolerances.

Sleeves 76 connected to the brackets 75 for connecting the unit swing type of power unit 3 are made to be rotatable through sliding bearings 77. In other words, the unit swing type of power unit 3 swings up and down relative to the links 5 and the vehicle body frame 4 as the sleeves 76 rotate.

This embodiment is constituted to support the unit swing type of power unit 3 at three points: at the bosses 55 of the left and right links 5, and the boss 203 of the engine bracket 201 interconnecting the left and right links 5. This constitution improves driving stability by restricting bend of the support shaft 63 for connecting the power unit and also improves sliding main body of the unit swing type power unit 3 as it swings up and down.

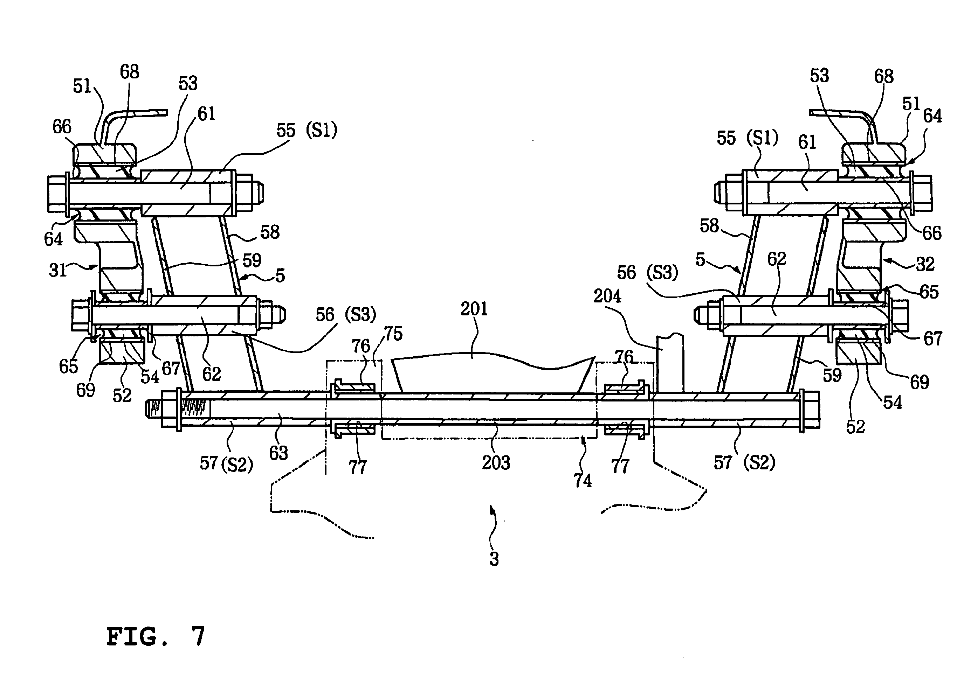

As described before, the vehicle, being straddle-type vehicle, in particular a motorcycle such as a scooter-type motorcycle, comprises a rear driving unit which is swingably interconnected to a main body frame of the vehicle. A connecting arrangement between the rear drive unit and the body frame comprises a swinging axis being preferably arranged at a front end of the rear drive unit. Also preferably, as shown in Fig. 1, a rear portion of the rear drive unit is supported on the body frame by a combined spring-damping unit such as rear cushion 15. As further shown in Fig. 7, the connecting arrangement comprises a number of, preferably three, parallel shafts being firmly interconnected to have a fixed position relative to one another. Preferably, the shafts are symmetrically arranged on both sides of a virtual vertical plane which divides the vehicle in a left and a right half in its longitudinal direction. At least two of the shafts which are preferably arranged vertically to said plane are connected to a body frame member such as an extension part 31, 32 of the body frame of the vehicle, preferably with a flexible member such as a rubber damper interposed between the shafts and the frame member. The third shaft is configured to function as a rotating axis for a connecting portion of the rear drive unit, being a unit swing type power unit 3 in the embodiment shown in Figs. 1 and 7. Preferably, the third shaft which itself is not directly connected to the frame member penetrates said virtual plane from one side to the other. The third shaft is preferably fixedly connected with reference to its position to the two other shafts via link members 5 which are arranged diagonally with respect to the shafts and/or to that virtual plane. According to the embodiment shown in Fig. 7, the shafts are formed as bolts 61, 62, 63 being held in bosses 55, 56, 57, the bosses connected via links 5, the links being diagonally arranged with respect to the bosses and the bolts, the bolts being held in rubber portions 53, 54 which are themselves supported in holes provided in the body frame members 31, 32. If seen in a lateral view, as shown in Fig. 1, the shafts are arranged diagonally with respect to a second virtual vertical plane being arranged vertically to the first virtual vertical plane. In other words, the first shaft being the uppermost of the three shafts is also the foremost of the three shafts, while the third shaft which penetrates the first virtual vertical plane is the lowermost and the rearmost of the three shafts. As mentioned before, the rear drive unit, being the unit swing type power unit 3, is centrally supported by at least one holding member arrange at said third shaft.

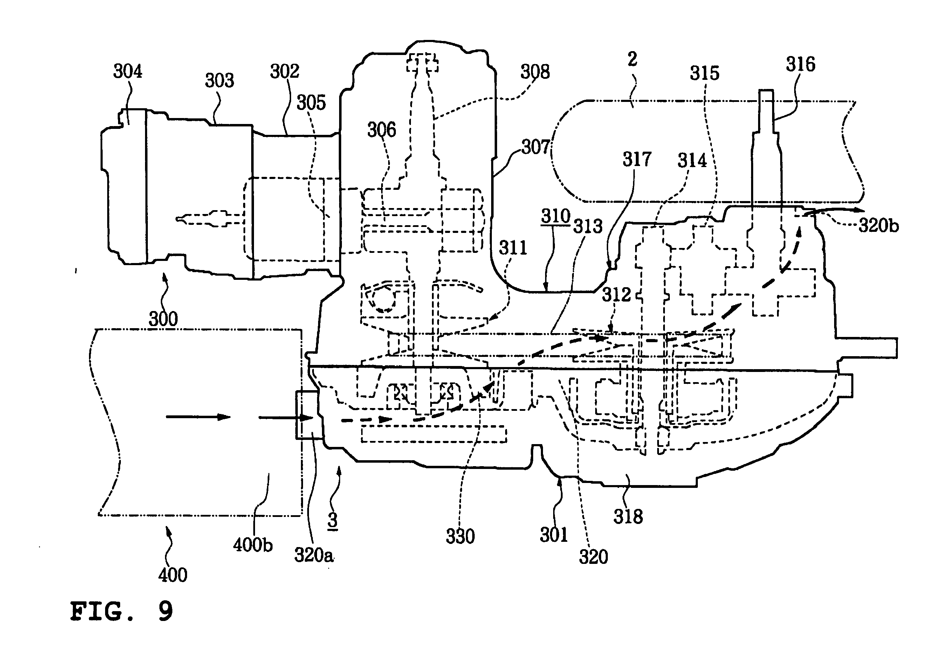

As shown in FIG. 9, the unit swing type power unit 3 is a single body made up of an engine main body 300 and a continuously variable transmission (CVT) 301 of a V-belt type. In a rough description, the engine main body 300 is made up of: a crankcase 307 made of aluminum alloy, a cylinder block 302 with cylinders directed generally horizontally forward and fit to the front face of the crankcase 307, a cylinder head 303 mated to the cylinder block 302 and tightened, and a head cover 304 removably mated to the front face of the cylinder head 303. Pistons 305 inserted to be slidable in the cylinder block 302 are connected through connecting rods 306 to a crankshaft 308 placed in the crankcase 307 and directed in the direction of vehicle width.

The V-belt type CVT 301 is made by housing a transmission main body in a transmission chamber 320 of the transmission case 310 extending from the left side of the engine main body 300 rearward along the left hand side of the vehicle. Roughly speaking, the transmission main body is constituted by routing a V-belt 313 around a drive pulley 311 and a driven pulley 312, with the former attached to the left end of the crankshaft (drive shaft) 308 located on the side of the engine main body 300 in the transmission case 310 and with the latter attached to the driven shaft 314 located on the side of the rear wheel 2. Rotation of the driven shaft 314 is transmitted, while being reduced according to the ratio of cogs of gears, to the rear wheel shaft 316 through an intermediate shaft 315 placed in the transmission chamber 320.

The transmission case 310 is made up of: a case main body 317 formed integrally with the crankcase 307 and extending to the rear wheel shaft 316, an aluminum alloy-made case cover 318 removably attached to the outer (left) side of the case main body 317 and a resin-made cover 319 placed over the external surface of the case cover 318.

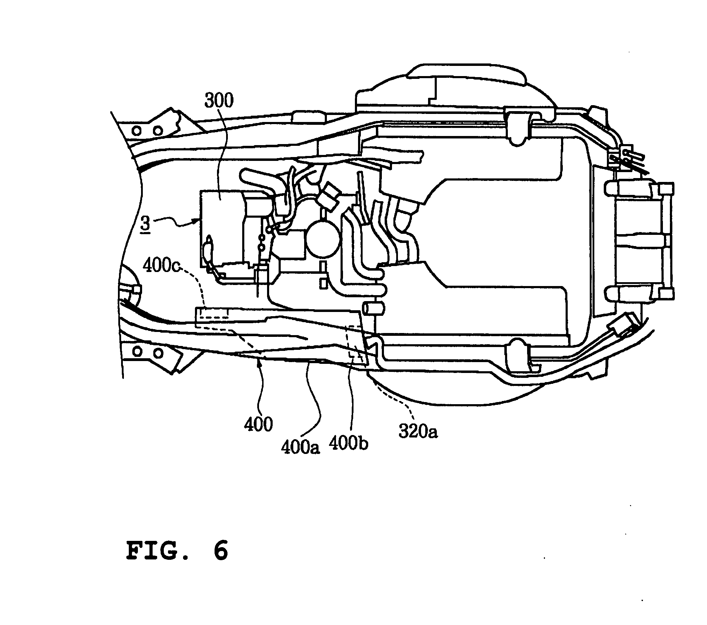

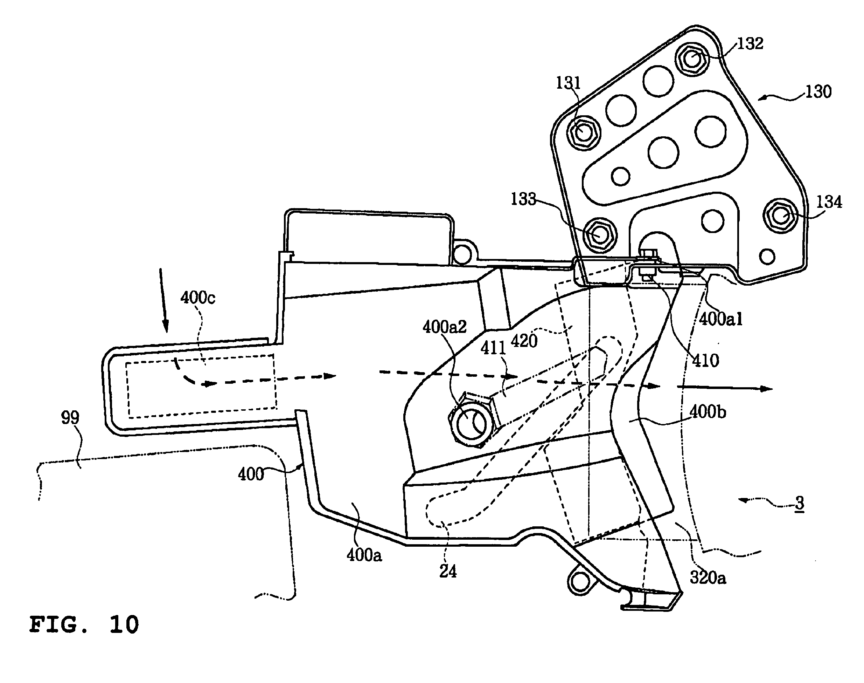

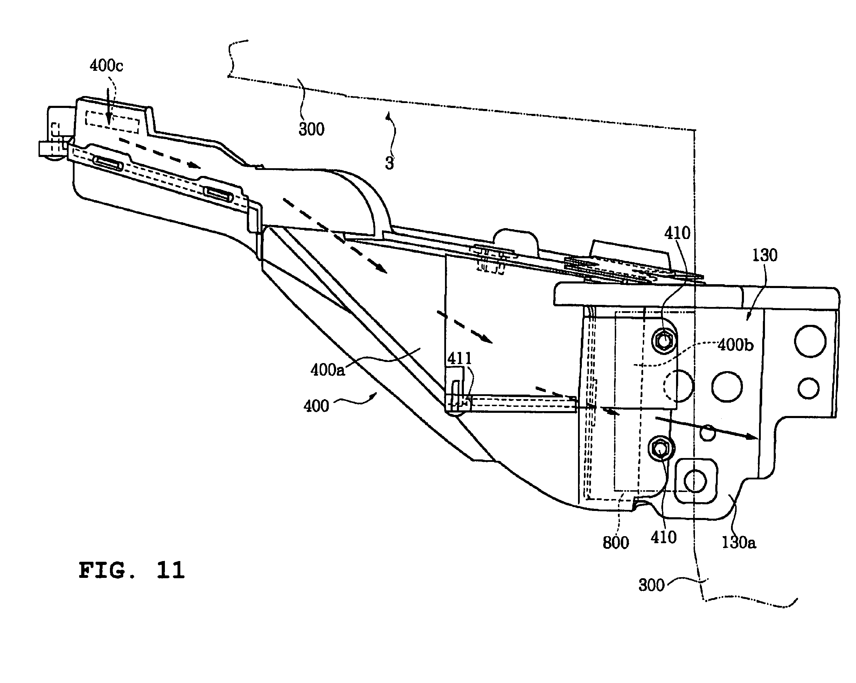

In this embodiment, as shown in FIGs. 5, 6, 9 to 11, an air suction duct 400 is provided to suction cooling air into the transmission chamber 320 of the unit swing type of power unit 3. The unit swing type of power unit 3 is adapted that the front part of the transmission case 310 is made to project to form an introduction opening 320a on the front side of the transmission chamber 320. Cooling air is drawn by the rotation of a cooling fan 330 provided on the outer side of the drive pulley 311 through the introduction opening 320a, flows and cools the transmission chamber 320 and goes out through a discharge opening 320b formed on the rear side of the transmission case 310. The air suction duct 400 is made up of a duct main body 400a with its rear side having a connection opening 400b and with its front side having a fresh air suction opening 400c. The rear upper part 400a1 of the duct main body 400a is secured to the step part 130a of the footrest 130 using two bolts 410 and attached through the footrest 130 to the upper frame 23. An attachment hole 400a2 is bored through the central part of the duct main body 400a to attach it to a bracket 420 of the lower frame 24 by inserting a fitting bolt 411 from outside through the attachment hole 400a2.

As described above, the air suction duct 400 is supported simply and securely on the vehicle body frame 4 by attaching the air suction duct 400 to the upper frame 23 and to the lower frame 24.

A clearance 800 is present between the connection opening 400b of the air suction duct 400 and the introduction opening 320a. The connection opening 400b covers the introduction opening 320a so that the introduction opening 320a can swing with the unit swing type of power unit 3. The fresh air suction opening 400c of the air suction duct 400 extends forward from the duct main body 400a and is open to the interior of the vehicle body. Fresh air is drawn through the fresh air suction opening 400c to the duct main body 400a, through the connection opening 400b and, before exiting through the discharge opening 320b, sent to the transmission chamber 320.

As described above, since the connection opening 400b of the air suction duct 400 covers the introduction opening 320a so that it can swing, opening area of the air suction passage for drawing cooling air into the transmission chamber 320 of the unit swing type of power unit 3 that swings can be easily secured to improve cooling efficiency. Besides, since the fresh air suction opening 400c of the air suction duct 400 is open to the interior of the vehicle body, mud and water are prevented from entering the vehicle body from outside when the vehicle runs. Moreover, since the fresh air suction opening 400c of the air suction duct 400 is located above the fuel tank 99, mud and water are prevented from entering from under the vehicle body by the presence of the fuel tank 99 when the vehicle runs.

This invention is applicable to a vehicle, such as preferably a scooter type motorcycle, provided with an air suction duct for drawing cooling air into the transmission chamber of a unit swing type of power unit.

As described above, in order to increase cooling efficiency by securing the opening area of an air suction passage, a scooter type of motorcycle has a unit swing type of power unit 3 supported for free swinging on the vehicle body frame 4, with the unit swing type of power unit 3 having an air suction duct 400 for drawing cooling air into the transmission chamber 320 of the unit swing type of power unit 3. An introduction opening 320a is formed on the front side of the transmission chamber 320. The air suction duct 400 is supported on the vehicle body frame 4. The air suction duct 400 has: a connection opening 400b covering the introduction opening 320a so that it can swing, and a fresh air suction opening 400c that is open to the interior of the vehicle body.

With the above constitution, this invention provides amongst others the following effects.

Since the air suction duct has the connection opening that covers the introduction opening so that the introduction opening can swing, it is possible to easily secure the opening area of the air suction passage for introducing cooling air into the transmission chamber of the unit swing type of power unit that swings, and to improve cooling efficiency. Moreover, since the air suction duct has the fresh air suction opening that is open to the interior of the vehicle body, it is possible to prevent mud and water from entering from outside the vehicle body while the vehicle is running.

Further, since the fresh air suction opening is located above the fuel tank, it is possible to prevent mud and water from entering the fresh air suction opening from under the vehicle body when the vehicle is running.

Furthermore, since the air suction duct is attached to the upper and lower frames, the air suction duct is supported securely in a simple manner on the vehicle body frame.

## Claims

1. Vehicle, in particular a scooter type motorcycle, having a unit swing type power unit (3) supported for swinging on a vehicle body frame (4),
wherein an introduction opening (320a) for drawing in cooling air is formed at a transmission chamber (320) of the unit swing type power unit (3), and
wherein an air suction duct (400) for introducing the cooling air to the introduction opening (320a) is fixedly supported on the vehicle body frame (4), **characterized in that**
the air suction duct (400) comprises a connection opening (400b) which covers the introduction opening (320a) for a freely swinging movement therebetween.

2. Vehicle according to claim 1, **characterized in that** the connection opening (400b) surrounds the introduction opening (320a) with a clearance (800) being provided therebetween.

3. Vehicle according to claim 1 or 2, **characterized in that** the introduction opening (320a) is provided at a front side of the transmission chamber (320) and/or **in that** the connection opening (400b) is provided at a rear end of a main body (400a) of the air suction duct (400).

4. Vehicle according to at least one of the claims 1 to 3, **characterized in that** a fresh air suction opening (400c) is provided at a front end portion of a main body (400a) of the air suction duct (400).

5. Vehicle according to at least one of the claims 1 to 4, **characterized in that** a fresh air suction opening (400c) is open to an interior of the vehicle body, in particular to center tunnel (121) provided laterally between footrest regions (22) of the vehicle.

6. Vehicle according to at least one of the claims 1 to 5, **characterized in that** the fresh air suction opening (400c) of the air suction duct (400) is located above a fuel tank (99).

7. Vehicle according to at least one of the claims 1 to 6, **characterized in that** the vehicle body frame (4) comprises an upper frame (23) extending from a head pipe (21) through a footrest region (22) and below a seat (9) to the rear end of the vehicle body (4), and a lower frame (24) extending from a middle portion of the upper frame (23) downwardly, and wherein the air suction duct (400) is located between and attached to the upper and/or lower frames (23,24).

8. Vehicle according to at least one of the claims 1 to 7, **characterized in that** a cooling fan (330) is provided in the transmission chamber (320), in particular on an outer side of a drive pulley (311) of a continuously variable transmission (301), for drawing in the cooling air into the transmission chamber (320).

9. Vehicle according to at least one of the claims 1 to 8, **characterized in that** a discharge opening (320b) is formed on a rear side of the transmission chamber (320), the discharge opening (320b) preferably being directed toward a rear wheel (2) of the vehicle.

10. Vehicle according to at least one of the claims 1 to 9, **characterized in that** a main body (400a) of the air suction duct (400) comprises an attachment hole (400a2) for attachment of the air suction duct (400) to a lower frame (24) of the vehicle body frame (4) and/or **in that** a connection opening (400b) is provided at a rear upper part (400a1) of the main body (400a) of the air suction duct (400) for attachment thereof to an upper frame (23) of the vehicle body frame (4), in particular to a step part (130a) of a footrest (130) thereof.

## Patentansprüche

1. Fahrzeug, insbesondere ein Motorrad vom Roller- Typ, das eine Antriebseinheit (3) vom Schwing- Typ hat, gelagert zum Schwingen an einem Fahrzeug- Karosserierahmen (4),
wobei eine Einleitungsöffnung (320a) zum Ansaugen von Kühlluft an einer Getriebekammer (320) der Antriebseinheit (3) vom Schwing- Typ gebildet ist, und
wobei ein Luftansaugkanal (400) zum Einleiten der Kühlluft in die Einleitungsöffnung (320a) fest an dem Fahrzeug- Karosserierahmen (4) gelagert ist, **dadurch gekennzeichnet, dass**
der Luftansaugkanal (400) eine Verbindungsöffnung (400b) aufweist, die die Einleitungsöffnung (320a) für eine freie Schwingbewegung zwischen diesen überdeckt.

2. Fahrzeug nach Anspruch 1, **dadurch gekennzeichnet, dass** die Verbindungsöffnung (400b) die Einleitungsöffnung (320a) mit einem dazwischen vorgesehenen Spalt (800) umgibt.

3. Fahrzeug nach Anspruch 1 oder 2, **dadurch gekennzeichnet, dass** die Einleitungsöffnung (320a) an einer Vorderseite der Getriebekammer (320) vorgesehen ist und / oder **dass** die Verbindungsöffnung (400b) an einem hinteren Ende eines Hauptkörpers (400a) des Luftansaugkanals (400) vorgesehen ist.

4. Fahrzeug nach zumindest einem der Ansprüche 1 bis 3, **dadurch gekennzeichnet, dass** eine Frischluftansaugöffnung (400c) an einem vorderen Endabschnitt eines Hauptkörpers (400a) des Luftansaugkanals (400) vorgesehen ist.

5. Fahrzeug nach zumindest einem der Ansprüche 1 bis 4, **dadurch gekennzeichnet, dass** eine Frischluftansaugöffnung (400c) zu einem Inneren der Fahrzeugkarosserie, insbesondere in einen Mitteltunnel (121), vorgesehen seitlich zwischen dem Fußstützenbereichen (22) des Fahrzeuges offen ist.

6. Fahrzeug nach zumindest einem der Ansprüche 1 bis 5, **dadurch gekennzeichnet, dass** eine Frischluftansaugöffnung (400c) des Luftansaugkanals (400) oberhalb des Kraftstofftanks (99) angeordnet ist.

7. Fahrzeug nach zumindest einem der Ansprüche 1 bis 6, **dadurch gekennzeichnet, dass** der Fahrzeug- Karosserierahmen (4) einen oberen Rahmen (23) aufweist, der sich von einem Kopfrohr (21) durch den Fußstützbereich (22) und unter einem Sitz (9) zu dem hinteren Endes der Fahrzeug- Karosserie (4) erstreckt, und einen unteren Rahmen (24), der sich von dem Mittelabschnitt des oberen Rahmens (23) abwärts erstreckt, und wobei der Luftansaugkanal (400) zwischen zu dem oberen Rahmen und / oder unteren Rahmen (23/24) angeordnet und mit diesem(n) verbunden ist.

8. Fahrzeug nach zumindest einem der Ansprüche 1 bis 7, **dadurch gekennzeichnet, dass** ein Kühllüfter (330) in der Getriebekammer (320) vorgesehen ist, insbesondere an einer Außenseite einer Antriebsriemenscheibe (311) eines stufenlos veränderbaren Getriebes (301), um die Kühlluft in die Getriebekammer (320) anzusaugen.

9. Fahrzeug nach zumindest einem der Ansprüche 1 bis 8, **dadurch gekennzeichnet, dass** eine Auslassöffnung (320b) an einer Rückseite der Getriebekammer (320) gebildet ist, wobei die Auslassöffnung (320b) vorzugsweise in die Richtung zu einem Hinterrad (2) des Fahrzeuges gerichtet ist.

10. Fahrzeug nach zumindest einem der Ansprüche 1 bis 9, **dadurch gekennzeichnet, dass** ein Hauptkörper (400a) des Luftansaugkanals (400) eine Befestigungsbohrung (400a2) zum Befestigen des Luftansaugkanals (400) an einem unteren Rahmen (24) des Fahrzeug- Karosserierahmens (4) aufweist und / oder **dadurch**, **dass** eine Verbindungsöffnung (400b) an einem hinteren oberen Teil (400a1) des Hauptkörpers (400a) des Luftansaugkanals (400) zum Befestigen desselben an dem oberen Rahmen (23) des Fahrzeug- Karosserierahmens (4), insbesondere an einem Stufenteil (130a) einer Fußstütze (130) desselben, vorgesehen ist.

## Revendications

1. Véhicule, en particulier une motocyclette de type scooter, ayant un groupe moteur de type oscillant (3) supportée pour osciller sur le cadre d'un véhicule (4),
dans lequel une ouverture d'introduction (320a) pour aspirer de l'air de refroidissement est formée au niveau d'une chambre de transmission (320) du groupe moteur de type oscillant (3), et
dans lequel une canalisation d'aspiration d'air (400) pour introduire l'air de refroidissement dans l'ouverture d'introduction (320a) est supportée de manière fixe sur le cadre du véhicule (4), **caractérisé en ce que**
la canalisation d'aspiration d'air (400) comprend une ouverture de raccordement (400b) qui recouvre l'ouverture d'introduction (320a) pour permettre un mouvement libre d'oscillation entre elles.

2. Véhicule selon la revendication 1, **caractérisé en ce que** l'ouverture de raccordement (400b) entoure l'ouverture d'introduction (320a), un jeu (800) étant prévu entre elles.

3. Véhicule selon la revendication 1 ou 2, **caractérisé en ce que** l'ouverture d'introduction (320a) est formée au niveau d'une face avant de la chambre de transmission (320) et/ou **en ce que** l'ouverture de raccordement (400b) est formée au niveau d'une extrémité arrière d'un corps principal (400a) de la canalisation d'aspiration d'air (400).

4. Véhicule selon au moins l'une des revendications 1 à 3, **caractérisé en ce qu'**une ouverture d'aspiration d'air frais (400c) est formée au niveau d'une partie d'extrémité avant d'un corps principal (400a) de la canalisation d'aspiration d'air (400).

5. Véhicule selon au moins l'une des revendications 1 à 4, **caractérisé en ce qu'**une ouverture d'aspiration d'air frais (400c) s'ouvre vers l'intérieur de la carrosserie du véhicule, en particulier sur un tunnel central (121) formé latéralement entre les zones de repose-pied (22) du véhicule.

6. Véhicule selon au moins l'une des revendications 1 à 5, **caractérisé en ce que** l'ouverture d'aspiration d'air frais (400c) de la canalisation d'aspiration d'air (400) se trouve au-dessus d'un réservoir de carburant (99).

7. Véhicule selon au moins l'une des revendications 1 à 6, **caractérisé en ce que** le cadre du véhicule (4) comprend un cadre supérieur (23) s'étendant d'un tube de fourche (21) à travers une zone de repose-pied (22) et au-dessous d'un siège (9) vers l'extrémité arrière de la carrosserie du véhicule (4), et un cadre inférieur (24) s'étendant d'une partie intermédiaire du cadre supérieur (23) vers le bas, et dans lequel la canalisation d'aspiration d'air (400) est disposée entre les cadres supérieur et/ou inférieur (23, 24) et est fixée sur eux.

8. Véhicule selon au moins l'une des revendications 1 à 7, **caractérisé en ce qu'**un ventilateur de refroidissement (330) est dans la chambre de transmission (320), en particulier sur une face externe d'une poulie d'entraînement (311) d'une transmission à variation continue (301), pour aspirer l'air de refroidissement dans la chambre de transmission (320).

9. Véhicule selon au moins l'une des revendications 1 à 8, **caractérisé en ce qu'**une ouverture d'évacuation (320b) est formée sur une face arrière de la chambre de transmission (320), l'ouverture d'évacuation (320b) étant de préférence orientée vers la roue arrière (2) du véhicule.

10. Véhicule selon au moins l'une des revendications 1 à 9, **caractérisé en ce qu'**un corps principal (400a) de la canalisation d'aspiration d'air (400) comprend un trou de fixation (400a2) pour fixer la canalisation d'aspiration d'air (400) au cadre inférieur (24) du cadre du véhicule (4) et/ou **en ce qu'**une ouverture de raccordement (400b) est prévue au niveau d'une partie supérieure arrière (400a1) du corps principal (400a) de la canalisation d'aspiration d'air (400) pour fixer celle-ci au cadre supérieur (23) du cadre du véhicule (4), en particulier à une partie de marche (130a) d'un repose-pied (130) de celui-ci.
